(19) Europäisches Patentamt
European Patent Office
Office européen des brevets

(11) Veröffentlichungsnummer : **0 064 236**
**B1**

(12) # EUROPÄISCHE PATENTSCHRIFT

(45) Veröffentlichungstag der Patentschrift : **07.11.84**

(51) Int. Cl.³ : **C 08 G 65/28**, C 10 M 3/22, C 10 M 1/28

(21) Anmeldenummer : **82103436.0**

(22) Anmeldetag : **23.04.82**

(54) **Polyether, ihre Herstellung und ihre Verwendung als Schmiermittel.**

(30) Priorität : **20.03.82 DE 3210283**
**06.05.81 DE 3117841**
**06.05.81 DE 3117840**
**06.05.81 DE 3117839**

(43) Veröffentlichungstag der Anmeldung : **10.11.82 Patentblatt 82/45**

(45) Bekanntmachung des Hinweises auf die Patenterteilung : **07.11.84 Patentblatt 84/45**

(84) Benannte Vertragsstaaten : **AT BE CH DE FR GB IT LI NL SE**

(56) Entgegenhaltungen :
**CH-A- 550 836**
**DE-B- 1 120 139**
**US-A- 3 356 619**

(73) Patentinhaber : **BAYER AG**
**Konzernverwaltung RP Patentabteilung**
**D-5090 Leverkusen 1 Bayerwerk (DE)**

(72) Erfinder : **Hentschel, Karl-Heinz, Dr.**
**Heckschenstrasse 89**
**D-4150 Krefeld 1 (DE)**
Erfinder : **Dhein, Rolf, Dr.**
**Deswatinesstrasse 30**
**D-4150 Krefeld 1 (DE)**
Erfinder : **Kussi, Siegfried**
**Brandenburger Strasse 43**
**D-5090 Leverkusen 1 (DE)**
Erfinder : **Winter, Hans, Prof. Dr. Ing.**
**Eugen-Kalkschmidt-Weg 7**
**D-8000 München 81 (DE)**
Erfinder : **Vojacek, Herbert, Dipl.-Ing.**
**Budapester Strasse 11**
**D-8000 München 80 (DE)**

**EP 0 064 236 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft neue Polyether, ihre Herstellung und ihre Verwendung als Schmiermittel, vor allem als Schmiermittel für Leistungsgetriebe.

Leistungsgetriebe sollen möglichst verlustarm arbeiten, um einen guten Übertragungswirkungsgrad zu erzielen und die Erwärmung der Getriebe gering zu halten.

Die in einem Getriebe auftretenden Gesamtverluste setzen sich zusammen aus den Reibungsverlusten, die durch eine Bewegungsübertragung der aufeinander abrollenden und gleichzeitig gleitenden Oberflächen bei hoher Anpreßkraft entstehen und den Plantsch- und Quetschverlusten, die durch Eintauchen bewegter Maschinenteile in die Ölfüllung hervorgerufen werden (H. Eiselt, Dissertation TU Dresden 1966 « Beitrag zur experimentellen und rechnerischen Bestimmung der Freßtragfähigkeit von Zahnradgetrieben unter Berücksichtigung der Zahnflankenreibung ; Ohlendorf, H. VDI-Z *102,* 216-224 (1960), « Verlustleistung und Erwärmung von Stirnrädern », G. Huber,

Dissertation TU München 1978, « Untersuchungen über Flankentragfähigkeit und Wirkungsgrad von Zylinderschneckengetrieben (Evolventenschnecken) ». Die Quetschverluste sind besonders bei schnell laufenden Getrieben erheblich.

Die in Leistungsgetrieben mit formschlüssiger Bewegungsübertragung eingesetzten Schmierstoffe dienen zur Minimierung der Reibungsverluste zwischen den Oberflächen. Gleichzeitig soll ein tragfähiger Schmierfilm, der sich durch die Abrollbewegung der Oberflächen aufbaut, diese Oberflächen voneinander trennen, um Verschleiß aller Arten (Freß-, Pitting-, Langsamlauf- und Grauleckigkeits-Verschleiß) möglichst niedrig zu halten.

Um einen ausreichend tragfähigen Schmierfilm in Getrieben aufbauen zu können, ist eine Mindestviskosität des Schmierstoffes erforderlich. Je ungünstiger die Betriebsbedingungen sind, umso größer muß die Viskosität gewählt werden, um unerwünschten Verschleiß zu vermeiden. Andererseits nehmen aber mit zunehmender Viskosität die Plantsch- und Quetschverluste stark zu ; dies hat eine unerwünschte Erhöhung der Getriebetemperatur zur Folge.

Die Schmierqualitäten von flüssigen Schmierstoffen werden entsprechend der Funktion des Schmierstoffes in einem Leistungsgetriebe durch das Reibungsverhalten unter Betriebsbedingungen (Influence of the Molekular Structure on the Traction Characteristics of Lubrication Fluids, H. Winter und Vojacek, Int. Symp. on Gearing Power Transm., Tokyo 1981), durch die Viskosität bei der Betriebstemperatur, durch das Viskositäts-Temperatur-Verhalten und durch den Viskositäts-Druck-Koeffizienten $\alpha$, der die Schmierfilmdicke beeinflußt, bestimmt (Schmiertechnik und Tribologie *27,* 55-57 (1980)).

Das Reibungsverhalten ist bestimmt durch die Reibungszahl. Sie ist definiert als Quotient der aus der Reibung entstehenden Reibkraft und der Anpreßkraft zwischen den Oberflächen.

Die Reibungszahl hängt im wesentlichen ab von dem Betriebsparameter, Umfangsgeschwindigkeit der aufeinander rollenden und gleitenden Oberflächen, Schlupf- und Anpreßkraft zwischen den beiden Oberflächen, wobei der Schlupf definiert ist als der absolute Wert des Quotienten aus der Differenz der beiden Umfangsgeschwindigkeiten under der größeren Umfangsgeschwindigkeit.

Die Reibungszahl soll im Gesamtbetriebsbereich so niedrig wie möglich sein, um die Reibungsverluste gering zu halten.

Die Viskosität des Schmierstoffes soll so niedrig wie möglich sein, wobei die Mindestviskosität bei Betriebstemperatur von den Betriebsbedingungen abhängt.

Die Viskosität soll so wenig wie möglich von der Temperatur abhängen. Als Maß für die Temperaturabhängigkeit der Viskosität wird der Viskositätsindex (im allgemeinen VI abgekürzt) angesehen. Der Viskositätsindex soll möglichst hoch sein.

Die Schmierstoffe sollen außerdem in den zu schmierenden Systemen (z. B. mechanischen Getrieben, Wälz- und Gleitlagern) mit den dort üblicherweise verwendeten Mineralölen verträglich sein, um bei einem Wechsel von den Mineralölen auf die neuen Schmiermittel mit den verbleibenden Restmengen an Mineralölen nicht zu Komplikationen zu führen. Sie sollen auch möglichst hydrophob sein, da aufgenommenes Wasser die Korrosion begünstigt. Außerdem ist eine hohe Wärmebelastbarkeit erwünscht.

Aus JP-A-50/13 3205 sind Polyalkylen-Glykol-Ether bekannt, die $C_8$-$C_{28}$-1,2-Epoxi-alkaneinheiten enthalten und ein Verhältnis Kohlenstoff zu Sauerstoff von 3,5 bis 9,5 haben. Diese bekannten Polyalkylen-Glykolether können zwar in Abmischungen mit Mineralölen als Schmiermittel verwendet werden, jedoch sind ihre Schmiereigenschaften nicht in jeder Hinsicht voll befriedigend. Dies wird deutlich an den zu hohen Scherreibungszahlen.

Die aus der US 3 382 055 bekannten Polyalkylen-Alkylen-Oxide, die als Additive für leichtere Schmieröle verwendet werden können, haben ebenfalls zu hohe Reibungszahlen.

Es wurden neue Polyether gefunden, die sich durch eine hohe Mineralölverträglichkeit und Mineralölmischbarkeit, geringe Wasseraufnahme, hohe Wärmebelastbarkeit und hohen Viskositätsindex bei gleichzeitig sehr niedrigen Reibungszahlen auszeichnet.

Die neuen Polyether sind erhältlich durch Polymerisation eines 1,2-Epoxyalkans, das 8 bis 26 Kohlenstoffatome enthält und eines Tetrahydrofurans in Gegenwart einer Hydroxyverbindung der Formel (I)

$$H—OR^1 \quad (I)$$

in der

$R^1$ Wasserstoff, einen Alkylrest mit 1 bis 24 Kohlenstoffatomen oder einen Hydroxyalkylrest mit 2 bis 40 Kohlenstoffatomen bedeutet.

Die erfindungsgemäß erhältlichen Polyether umfassen alle Polyether mit der gleichen Struktur, unabhängig von dem Verfahren nach dem sie hergestellt wurden.

Im allgemeinen enthalten die erfindungsgemäßen Polyether 10 bis 98 Gew.-Teile, bevorzugt 20 bis 95 Gew.-Teile, im besonderen bevorzugt 30 bis 90 Gew.-Teile, 1,2-Epoxyalkane und 2 bis 90 Gew.-Teile, bevorzugt 5 bis 80 Gew.-Teile, im besonderen bevorzugt 10 bis 70 Gew.-Teile, Tetrahydrofuran, jeweils bezogen auf die Gesamtmenge aller Oxacycloalkane.

Die Hydroxyverbindung wird im allgemeinen in einer Menge von 0,3 bis 95 Gew.-Teilen, bevorzugt von 0,8 bis 60 Gew.-Teilen, insbesondere bevorzugt von 1,6 bis 50 Gew.-Teilen, eingesetzt.

Bei der Verwendung von Wasser als Hydroxyverbindung ist die am Ende der Reaktion bei der Aufarbeitung zugesetzte Menge an Wasser im allgemeinen ausreichend.

In einer besonderen Ausführungsform enthalten die erfindungsgemäßen Polyether zusätzlich einer Niederalkylenoxid-Komponente mit Ethylenoxid und/oder Propylen- oder Butylenoxid, wobei die Hydroxyverbindung einmal monofunktionell und einmal bifunktionell sein kann.

Bevorzugte Polyether mit einer Niederalkylenoxid-Komponente und mit einer monofunktionellen Hydroxidverbindung sind erhältlich durch Polymerisation von 10 bis 90 Gew.-Teilen eines 1,2-Epoxyalkans, 5 bis 55 Gew.-Teilen eines Tetrahydrofurans und 0 bis 40 Gew.-Teilen Ethylenoxid und/oder 0 bis 70 Gew.-Teilen Propylen- oder Butylenoxid, wobei wenigstens Ethylenoxid oder Propylen- bzw. Butylenoxid eingesetzt wird, und in Gegenwart einer monofunktionellen Hydroxyverbindung der Formel (II)

$$H—OR^2 \quad (II)$$

in der

$R^2$ einen Alkylrest mit 1 bis 24 Kohlenstoffatomen bedeutet,

und wobei in dem Polyether das Verhältnis der Anzahl der Kohlenstoffatome zu der Anzahl der Sauerstoffatome 3,2 bis 10 : 1 beträgt.

Bevorzugte Polyether mit einer Niederalkylenoxid-Komponente und mit einer bifunktionellen Hydroxyverbindung sind erhältlich durch Polymerisation von 10 bis 90 Gew.-Teilen eines 1,2-Epoxyalkans, 5 bis 55 Gew.-Teilen eines Tetrahydrofurans und 0 bis 70 Gew.-Teilen Ethylenoxid und/oder 0 bis 70 Gew.-Teilen Propylen- oder Butylenoxid, wobei wenigstens Ethylenoxid oder Propylen- bzw. Butylenoxid eingesetzt wird, und in Gegenwart einer bifunktionellen Hydroxyverbindung der Formel (III)

$$H—OR^3 \quad (III)$$

in der

$R^3$ Wasserstoff oder einen Hydroxyalkylrest mit 2 bis 40 Kohlenstoffatomen bedeutet,

und wobei in dem Polyether das Verhältnis der Anzahl der Kohlenstoffatome zu der Anzahl der Sauerstoffatome 3,6 bis 10 : 1 beträgt.

Die Niederalkylenoxid-Komponenten Ethylenoxid, Propylenoxid und Butylenoxid werden erfindungsgemäß in einer Menge von 0 bis 70 Gew.-Teilen, bevorzugt 5 bis 65 Gew.-Teilen, insbesondere bevorzugt 10 bis 60 Gew.-Teilen, bezogen auf die Gesamtmenge aller Oxacycloalkane, eingesetzt.

Die Mengen der mono- und bifunktionellen Hydroxyverbindungen entsprechen im allgemeinen den Mengen der Hydroxyverbindungen allgemein.

In den erfindungsgemäßen neuen Polyethern, die in Gegenwart einer Niederalkylenoxid-Komponente und mit monofunktionellen Hydroxyverbindungen hergestellt werden, beträgt das Verhältnis der Anzahl der Kohlenstoffatome zu der Anzahl der Sauerstoffatome 3,2 bis 10, bevorzugt 3,4 bis 9,5, insbesondere bevorzugt 3,6 bis 9,0 : 1.

In den erfindungsgemäßen neuen Polyethern, die in Gegenwart einer Niederalkylenoxid-Komponente und mit bifunktionellen Hydroxyverbindungen hergestellt werden, beträgt das Verhältnis der Anzahl der Kohlenstoffatome zu der Anzahl der Sauerstoffatome 3,6 bis 10, bevorzugt 3,8 bis 9,5, insbesondere bevorzugt 4,0 bis 9 : 1.

Bevorzugte erfindungsgemäße Polyether, die in Gegenwart einer Niederalkylenoxid-Komponente und mit monofunktionellen Hydroxyverbindungen hergestellt werden, sind erhältlich durch Polymerisation von 5 bis 65 Gew.-Teilen Ethylenoxid und/oder Propylen- oder Butylenoxid, 15 bis 80 Gew.-Teilen eines 1,2-Epoxyalkans mit 8 bis 16 Kohlenstoffatomen, 10 bis 50 Gew.-Teilen eines Tetrahydrofurans und in Gegenwart einer monofunktionellen Verbindung der Formel (IV)

$$H—OR^4 \quad (IV)$$

in der

$R^4$ einen Alkylrest mit 1 bis 18 Kohlenstoffatomen bedeutet,

und wobei in dem Polyether das Verhältnis der Anzahl der Kohlenstoffatome zu der Anzahl der Sauerstoffatome 3,4 bis 9,5 : 1 beträgt.

Bevorzugte erfindungsgemäße Polyether, die in Gegenwart einer Niederalkylenoxid-Komponente und mit bifunktionellen Hydroxyverbindungen hergestellt werden, sind erhältlich durch Polymerisation von 5 bis 65 Gew.-Teilen Ethylenoxid und/oder Propylen- oder Butylenoxid, 15 bis 80 Gew.-Teilen eines 1,2-Epoxyalkans mit 10 bis 18 Kohlenstoffatomen, 10 bis 50 Gew.-Teilen Tetrahydrofuran und in Gegenwart einer bifunktionellen Hydroxyverbindung der Formel (V)

$$H—OR^5 \qquad (IV)$$

in der

$R^5$ Wasserstoff oder einen Hydroxyalkylrest mit 2 bis 18 Kohlenstoffatomen bedeutet,

wobei in dem Polyether das Verhältnis der Anzahl der Kohlenstoffatome zu der Anzahl der Sauerstoffatome 3,8 bis 9,5 : 1 beträgt.

Der Kohlenwasserstoffrest der erfindungsgemäßen 1,2-Epoxyalkane kann geradkettig oder verzweigt sein und 8 bis 26, bevorzugt 10 bis 18, Kohlenstoffatome enthalten. Beispielsweise seien die folgenden 1,2-Epoxyalkane genannt : 1,2-Epoxi-octan, 1,2-Epoxi-nonan, 1,2-Epoxi-decan, 1,2-Epoxi-undecan, 1,2-Epoxi-dodecan, 1,2-Epoxi-tetradecan, 1,2-Epoxi-hexadecan und 1,2-Epoxi-octadecan.

In einer besonderen Ausführungsform der vorliegenden Erfindung ist es möglich, bis zu 70 Mol-% des eingesetzten 1,2-Epoxi-alkans ($C_8$-$C_{26}$) durch einen Glycidylester einer $C_5$-$C_{26}$-Neoalkansäure zu ersetzen. Bevorzugt können Neoalkansäuren mit 8 bis 24 Kohlenstoffatomen in Form ihrer Glycidylester eingesetzt werden.

Tetrahydrofuran umfaßt erfindungsgemäß außer dem unsubstituierten Tetrahydrofuran auch Tetrahydrofurane, die durch 1 bis 4, bevorzugt 1 oder 2, Niederalkylreste substituiert sind. Niederalkylreste können hierbei geradkettige oder verzweigte Kohlenwasserstoffreste sein und 1 bis etwa 6 Kohlenstoffatome enthalten. Beispielsweise seien die folgenden Tetrahydrofurane genannt : 2-Methyl-tetrahydrofuran, 3-Methyl-tetrahydrofuran, 4-Methyl-tetrahydrofuran, 5-Methyl-tetrahydrofuran, 3- oder 4-Isopropyltetrahydrofuran, 3,4-Diisopropyl-tetrahydrofuran, 2,3,4-Tributyl-tetrahydrofuran und 2,3,4,5-Tetramethyltetrahydrofuran. Bevorzugt ist das unsubstituierte Tetrahydrofuran.

Die erfindungsgemäßen Hydroxyverbindungen können sowohl monofunktionelle als auch bifunktionelle Hydroxyverbindungen sein.

Monofunktionelle Hydroxyverbindungen können erfindungsgemäß Alkohole sein, wobei der Alkanrest des Alkohols geradkettig oder verzweigt sein und 1 bis 24, bevorzugt 1 bis 18, Kohlenstoffatome enthalten kann. Die monofunktionelle Verbindung kann sowohl ein primärer, sekundärer als auch tertiärer Alkohol sein.

Beispielsweise seien die folgenden monofunktionellen Hydroxyverbindungen genannt : Methanol, Ethanol, Propanol, Isopropanol, Butanol, Isobutanol, sec.-Butanol, tert.-Butanol, Allylalkohol, Hexanol und 2-Ethyl-hexanol.

Bifunktionelle Hydroxyverbindungen können erfindungsgemäß Wasser oder Dihydroxyalkane sein, wobei der Alkanrest geradkettig oder verzweigt sein und 2 bis 40, bevorzugt 2 bis 18, Kohlenstoffatome enthalten kann. Die Hydroxygruppen können sich sowohl an den Enden als auch in der Mitte des Alkans befinden.

Bevorzugte bifunktionelle Verbindungen sind Dihydroxyalkane mit endständigen Hydroxygruppen. Beispielsweise seien die folgenden bifunktionellen Verbindungen genannt : Wasser, Ethandiol-1,2, Propandiol-1,2, propandiol-1,3, Butandiol-1,2, Butandiol-1,4, Hexandiol-1,6. Bevorzugte bifunktionelle Hydroxyverbindungen sind Wasser, Ethandiol-1,2 und Butandiol-1,4.

Im Falle der Verwendung von Wasser kommt das Reaktionsgemisch bevorzugterweise erst in der Aufarbeitungs- und Reinigungsphase mit dem Wasser in Kontakt.

Die erfindungsgemäßen neuen Polyether haben ein osmotisch bestimmtes Molekulargewicht in dem Bereich von etwa 400 bis etwa 10 000, bevorzugt in dem Bereich von etwa 600 bis etwa 4 000.

Die erfindungsgemäßen neuen Polyether haben bei 40 °C eine kinematische Viskosität von 5 bis 3 000 $mm^2/s$, bevorzugt von 20 bis 500 $mm^2/s$.

Der Viskositätsindex der erfindungsgemäßen neuen Polyether liegt im allgemeinen im Bereich von 150 bis 220.

Die Herstellung der erfindungsgemäßen neuen Polyether kann nach an sich bekannten Polymerisationsverfahren erfolgen (Angew. Chem. *72,* 927-934 (1960)).

Das Verfahren zur Herstellung der neuen Polyether ist dadurch gekennzeichnet, daß man 10 bis 98 Gew.-Teile eines 1,2-Epoxyalkans mit 8 bis 26 Kohlenstoffatomen und 2 bis 90 Gew.-Teilen Tetrahydrofuran in Gegenwart einer Hydroxyverbindung der Formel (I)

$$H—OR^1 \qquad (I)$$

in der

$R^1$ Wasserstoff, einen Alkylrest mit 1 bis 24 Kohlenstoffatomen oder einen Hydroxyalkylrest mit 2 bis 40 Kohlenstoffatomen bedeutet,

polymerisiert.

Das erfindungsgemäße Verfahren wird im allgemeinen im Temperaturbereich von – 20 bis 120 °C, bevorzugt von 0 bis 80 °C, insbesondere bevorzugt von 20 bis 60 °C, durchgeführt.

Im allgemeinen führt man das erfindungsgemäße Verfahren bei einem Druck von 0,5 bis 50 bar, bevorzugt von 1 bis 10 bar, insbesondere bevorzugt von 1,5 bis 2 bar, durch.

Das erfindungsgemäße Verfahren wird im allgemeinen in Gegenwart eines Polymerisationsstarters durchgeführt. Als Polymerisationsstarter für das erfindungsgemäße Verfahren können die für die Polyetherherstellung üblichen Polymerisationsstarter verwendet werden (Angew. Chem. *72*, 927-934 (1960)). Beispielsweise seien die folgenden Polymerisationsstarter genannt : Lewis-Säuren, wie z. B. Bortrifluorid und seine Addukte (Bortrifluoriddiethyltherat, Bortrifluortetrahydrofuranat), Aluminiumchlorid, Eisen-(III)-chlorid, Zinn-(IV)-chlorid, Titantetrachlorid, Zinnchlorid und Antimonpentachlorid.

Bevorzugter Polymerisationsstarter für das erfindungsgemäße Verfahren ist Bortrifluorid bzw. Bortrifluoridtetrahydrofuranat.

Der Polymerisationsstarter für das erfindungsgemäße Verfahren wird im allgemeinen in einer Menge von 0,001 bis 5,0 Gew.-%, bevorzugt von 0,01 bis 1,0 Gew.-%, bezogen auf das gesamte Reaktionsgemisch, eingesetzt.

Das erfindungsgemäße Verfahren kann beispielsweise wie folgt durchgeführt werden :

Im Reaktionsgefäß legt man eines der Ausgangsprodukte, vorzugsweise Tetrahydrofuran und gegebenenfalls den Alkohol, vor und gibt den Polymerisationsstarter hinzu. In das Reaktionsgemisch leitet man die anderen Reaktionskomponenten ein. Durch Regulieren der Geschwindigkeit des Einleitens kann das Verfahren in dem erfindungsgemäßen Temperaturbereich gehalten werden.

Nach Beendigung der Polymerisation erfolgt die Aufarbeitung in üblicher Weise, beispielsweise durch Waschen mit Wasser und nachfolgender Trocknung.

Die erfindungsgemäßen Polyether können beispielsweise als Schmiermittel, aber auch als Wärmeträgeröle verwendet werden.

Es ist möglich, die erfindungsgemäßen Polyether alleine als Schmiermittel zu verwenden oder sie mit anderen an sich bekannten Schmiermitteln zu mischen. Andere Schmiermittel sind beispielsweise : Mineralöle mit Schmierviskosität, Polyether vom Polyethylenoxid- und Polypropylenoxid-Typ, Esterschmieröle vom Diester-, Polyester- oder Neopentylpolyol-Typ und Phosphorsäureester.

Die erfindungsgemäßen Schmiermittel können auch übliche Additive enthalten, wie z. B. Viskositätsindexverbesserer, Stockpunkterniedriger, Dispergiermittel, überbasische Dispergiermittel, Detergenzadditive, Antioxidantien, Verschleißminderer, Extreme-Pressure-Zusätze, Korrosionsschutzmittel, Schaumverhütungsmittel usw.

Die erfindungsgemäßen Polyether vertragen sich mit den bekannten üblichen Schmiermitteln, so daß ein abwechselnder Einsatz ohne Reinigung des zu schmierenden Systems möglich ist. Sie sind auch weitgehend unbeschränkt mischbar mit den an sich bekannten Schmiermitteln.

Die erfindungsgemäßen Polyether zeigen überraschenderweise in der Kombination aller Eigenschaften eine hervorragende Eignung als Schmiermittel, die von den an sich bekannten Schmiermitteln nicht erreicht wird.

Die erfindungsgemäßen Schmiermittel können bevorzugt zur Verminderung der Reibung in mechanischen Getrieben mit Kraftübertragung durch Formschluß, insbesondere Schneckengetrieben und Hypoid-Getrieben, Wälz- und Gleitlagern und Anlagen für Papier- und Kunststoffkalandern eingesetzt werden.

## Beispiele

### Beispiel 1

In einem ca. 1 l Dreihalskolben legt man eine Mischung aus 86,4 g Tetrahydrofuran (höchstens 0,02 g Wasser), 1,9 g wasserfreien Methanol und 9,7 g Bortrifluoridtetrahydrofuranat vor und erhitzt auf ca. 35 °C. Danach tropft man ein Gemisch aus 585 g 1,2-Epoxidecan und 36,5 g wasserfreiem Methanol mit solcher Geschwindigkeit zu, daß eine Reaktionstemperatur von ca. 55 °C eingehalten wird (Zutropfzeit ca. 270 Minuten). Nach 1 Stunde Nachreaktionszeit bei 55 bis 60 °C kühlt man ab, gibt eine Lösung von 16,2 g Soda in 82 g Wasser zu, heizt auf 100 °C hoch, beläßt die Mischung 1 Stunde bei dieser Temperatur, erhöht danach die Temperatur auf 140 °C und destilliert das Wasser ab. Nach Abkühlung auf ca. 90 °C und erneuter Zugabe von ca. 15 g Wasser heizt man bei 100 Torr innerhalb von 3 Stunden bis auf 180 °C hoch, beläßt dann die Mischung 2 Stunden bei diesen Bedingungen und drückt das ca. 100 °C heiße Öl über eine Drucknutsche ab.

Ausbeute : ca. 743 g (79,4 % der Theorie).

Zusammensetzung der eingesetzten Oxacycloalkane :

Tetrahydrofuran : 12,9 Gew.-%
1,2-Epoxyalkane : 87,1 Gew.-%
Stockpunkt : – 48 bis – 50 °C
OH-Zahl : ca. 77, daraus errechnetes Molekulargewicht ca. 729
osmotisches Molekulargewicht : 570

Elementaranalyse : 73,80 % C 12,98 % H
13,22 % O
Kinematische Viskositäten bei 37,8 °C : 55,5 $mm^2/s$
98,9 °C : 8,88 $mm^2/s$
Viskositätsindex (Extension) : 150

Beispiel 2

In analoger Weise wie beim Beispiel 1 wird eine Mischung von 108 g absolutem Tetrahydrofuran, 2,4 g wasserfreiem Methanol und 12,2 g Bortrifluorid-tetrahydrofuranat vorgelegt, auf 30 °C erhitzt und danach eine aus 487,7 g 1,2-Epoxidodecan, 365,6 g 1,2-Epoxidecan und 45,6 g wasserfreiem Methanol bestehende Mischung innerhalb 5 Stunden zugetropft, so daß die Reaktionstemperatur bei ca. 55 °C liegt. Nach 1-stündiger Nachreaktionszeit bei 55 bis 60 °C wird in analoger Weise zum Beispiel 1 aufgearbeitet.

Ausbeute : 813 g (85,1 % der Theorie).
Zusammensetzung der eingesetzten Oxacycloalkane :

Tetrahydrofuran : 11,2 Gew.-%
1,2-Epoxyalkane : 88,8 Gew.-%
Stockpunkt : – 27 bis – 28 °C
OH-Zahl : 65, daraus errechnetes Molekulargewicht ca. 863
Elementaranalyse : 74,40 % C 12,85 % H 12,75 % O
Kinematische Viskositäten bei 37,8 °C 66,9 $mm^2/s$
98,9 °C 11,0 $mm^2/s$
Viskositätsindex (Extension) : 168

Beispiel 3

In analoger Weise wie beim Beispiel 1 wird eine Mischung von 108 g absolutem Tetrahydrofuran, 2,4 g wasserfreiem Methanol und 12,2 g Bortrifluorid-tetrahydrofuranat vorgelegt, auf 30 bis 35 °C hochgeheizt und danach eine aus 975,5 g 1,2-Epoxidodecan und 45,6 g wasserfreiem Methanol bestehende Mischung innerhalb 6 Stunden zugetropft, so daß die Reaktionstemperatur bei ca. 60 °C liegt. Nach 2-stündiger Nachreaktionszeit bei 60 °C wird in analoger Weise zum Beispiel 1 aufgearbeitet.

Ausbeute : 1 050 g (92,8 % der Theorie).
Zusammensetzung der eingesetzten Oxacycloalkane :

Tetrahydrofuran : 10,0 Gew.-%
1,2-Epoxyalkan : 90,0 Gew.-%
Stockpunkt : – 17 bis – 18 °C
OH-Zahl : 61,5, daraus berechnetes Molekulargewicht 912
Elementaranalyse : 74,93 % C 11,84 % H 13,23 % O
Kinematische Viskositäten bei 37,8 °C 69,4 $mm^2/s$
98,9 °C 10,8 $mm^2/s$
Viskositätsindex (Extension) : 156

Beispiel 4

In einem 2 l Dreihalskolben wird ein Gemisch aus 173,9 g absolutem Tetrahydrofuran und 10,5 g Bortrifluorid-tetrahydrofuranat vorgelegt, auf 40 °C erhitzt und danach während 7,5 Stunden eine Mischung aus 1 202,5 g 1,2-Epoxidodecan und 186,1 g absolutem Tetrahydrofuran zugetropft, so daß sich eine Reaktionstemperatur von 55 °C einstellt. Nach 1-stündiger Nachreaktionszeit bei 55 °C wird analog Beispiel 1 aufgearbeitet.

Ausbeute : 1 254 g (80,9 % der Theorie).
Zusammensetzung der eingesetzten Oxacycloalkane :

Tetrahydrofuran : 23,0 Gew.-%
1,2-Epoxyalkan : 77,0 Gew.-%
Stockpunkt : – 17 bis – 18 °C
Flammpunkt : 252 bis 253 °C
OH-Zahl : 23 bis 24, daraus berechnetes Molekulargewicht ca. 4 775
osmotisches Molekulargewicht : 2 100
Elementaranalyse : 75,16 % C 12,92 % H 11,92 % O
Kinematische Viskositäten bei 37,8 °C 460,9 $mm^2/s$
98,9 °C 56,7 $mm^2/s$

Viskositätsindex (Extension) : 200
Viskositäts-Druckkoeffizient : 14 [$m^2/N \cdot 10^{-9}$]
Scherreibungszahl : 0,030

Beispiel 5

In Analogie zum Beispiel 4 wird ein Gemisch von 377,5 g absolutem Tetrahydrofuran und 13,8 g Bortrifluorid-tetrahydrofuranat vorgelegt, auf 40 °C erhitzt und danach während 10 Stunden eine Mischung aus 781,2 g 1,2-Epoxidodecan und 404,1 g absolutem Tetrahydrofuran zugetropft, so daß sich eine Reaktionstemperatur von 45 bis 50 °C einstellt. Nach 1-stündigem Nachreagieren bei 45 bis 50 °C wird analog Beispiel 1 aufgearbeitet.
Ausbeute : 1 004 g (64,2 % der Theorie).
Zusammensetzung der eingesetzten Oxacycloalkane :

Tetrahydrofuran : 50,0 Gew.-%
1,2-Epoxyalkan : 50,0 Gew.-%
Stockpunkt : – 34 bis – 35 °C
OH-Zahl : 15 bis 16, darauf berechnetes Molekulargewicht ca. 7 200
osmotisches Molekulargewicht : 1 600
Elementaranalyse : 72,62 % C 12,51 % H 14,86 % O
Kinematische Viskositäten bei 37,8 °C 913,3 $mm^2/s$
98,9 °C 113,7 $mm^2/s$
Viskositätsindex (Extension) : 234

Beispiel 6

In Analogie zum Beispiel 4 wird ein Gemisch von 528,3 g absolutem Tetrahydrofuran und 16,5 g Bortrifluorid-tetrahydrofuranat vorgelegt, auf 40 °C erhitzt und danach während 6,5 Stunden eine Mischung aus 468,7 g 1,2-Epoxidodecan und 565,5 g absolutem Tetrahydrofuran zugetropft, so daß sich eine Reaktionstemperatur von 45 bis 50 °C einstellt. Nach 1-stündigem Nachreagieren bei 45 bis 50 °C wird analog Beispiel 1 aufgearbeitet.
Ausbeute : 982 g (62,8 % der Theorie).
Zusammensetzung der eingesetzten Oxacycloalkane :

Tetrahydrofuran : 70,0 Gew.-%
1,2-Epoxyalkase : 30,0 Gew.-%
Stockpunkt : – 21 bis – 22 °C
OH-Zahl : 11, daraus berechnetes Molekulargewicht ca. 10 200
osmotisches Molekulargesicht : 1 500
Elementaranalyse : 70,48 % C 12,25 % H 17,27 % O
Kinematische Viskositäten bei 37,8 °C 2 272 $mm^2/s$
98,9 °C 255,3 $mm^2/s$
Viskositätsindex (Extension) : 264

Beispiel 7

In Analogie zum Beispiel 1 wird ein Gemisch aus 108 g absolutem Tetrahydrofuran, 2,4 g wasserfreiem Methanol und 12,2 g Bortrifluorid-tetrahydrofuranat vorgelegt, auf 30 °C erwärmt und hierzu eine Mischung aus 487,7 g 1,2-Epoxidodecan 551,3 g einer Mischung aus Neoalkansäure-glycidylestern (mittleres Molekulargewicht 245) und 45,6 g wasserfreiem Methanol innerhalb von 11 Stunden zugetropft, so daß sich eine Reaktionstemperatur von ca. 45 bis 50 °C einstellt. Nach 2-stündiger Nachreaktionszeit bei 45 bis 50 °C wird analog dem Beispiel 1 aufgearbeitet.
Ausbeute : 1 015 g (84,9 % der Theorie).
Zusammensetzung der eingesetzten Oxacycloalkane :

Tetrahydrofuran : 9,4 Gew.-%
1,2-Epoxyalkane : 90,0 Gew.-%
(einschließlich der Neoalkansäure-glycidylester).

Die « 1,2-Epoxyalkane » enthalten also 47 Mol-% Neoalkansäureglycidylester.

Stockpunkt : – 37 bis – 38 °C
OH-Zahl : 78, daraus berechnetes Molekulargewicht ca. 720
osmotisches Molekulargewicht : 600

Elementaranalyse : 70,88 % C 12,07 % H 17,05 % O
Kinematische Viskositäten bei 37,8 °C 98,1 $mm^2/s$
98,9 °C 11,3 $mm^2/s$
Viskositätsindex (Extension) : 111

Beispiel 8

In Analogie zum Beispiel 4 wird ein Gemisch von 541,8 g absolutem Tetrahydrofuran und 18,0 g Bortrifluorid-tetrahydrofuranat vorgelegt, auf 45 °C erhitzt und danach während 10 Stunden 773,5 g 1,2-Epoxidodecan, 232,2 g absolutem Tetrahydrofuran und 24,5 g eines etwa 36 Kohlenstoffatome pro Molekül enthaltenden Dialkohols zugetropft, so daß sich eine Reaktionstemperatur von 45 bis 50 °C einstellt. Nach 1-stündiger Nachreaktionszeit wird aufgearbeitet.
Ausbeute : 1 100 g
Zusammensetzung der eingesetzten Oxacycloalkane :
Tetrahydrofuran : 50,0 Gew.-%
1,2-Epoxyalkane : 50,0 Gew.-%
Stockpunkt : – 16 °C
OH-Zahl : 22 bis 23, daraus berechnetes Molekulargewicht ca. 4 990
osmotisches Molekulargewicht : 1 660
Elementaranalyse : 72,59 % C 12,16 % H 15,34 % O
Kinematische Viskosität bei – 37,8 °C 895,6 $mm^2/s$
98,9 °C 125,9 $mm^2/s$
Viskositätsindex (Extension) : 255
Viskositäts-Druckkoeffizient : 11 [$m^2/N \cdot 10^{-9}$]
Scherreibungszahl : 0,033

Beispiel 9

In Analogie zum Beispiel 1 wird ein Gemisch von 900 g absolutem Tetrahydrofuran, 1,3 g wasserfreiem n-Butanol und 13,5 g Bortrifluorid-tetrahydrofuranat vorgelegt, auf 45 °C erhitzt und hierzu eine Mischung von 24,1 g n-Butanol mit 600 g 1,2-Epoxidecan innerhalb von 11 Stunden so zugetropft, daß sich eine Reaktionstemperatur von ca. 45 bis 50 °C einstellt. Nach 2-stündiger Nachreaktionszeit bei 45 bis 50 °C wird aufgearbeitet.
Ausbeute : 1 163 g
Zusammensetzung der eingesetzten Oxacycloalkane :

Tetrahydrofuran : 59,0 Gew.-%
1,2-Epoxyalkan : 41,0 Gew.-%
Stockpunkt : – 15 °C
OH-Zahl : 19 : 20, daraus abgeleitetes Molekulargewicht ca. 2 880
osmotisches Molekulargewicht : 1 260
Elementaranalyse : 70,54 % C 12,16 % H 17,30 % O
Kinematische Viskosität bei 37,8 °C 878,3 $mm^2/s$
98,9 °C 106,1 $mm^2/s$
Viskositätsindex (Extension) : 227
Viskositäts-Druckkoeffizient : 14 [$m^2/N \cdot 10^{-9}$]
Scherreibungszahl : 0,032

Beispiel 10

In einem luftdicht verschlossenen, ca. 2 l fassenden Schüttelgefäß aus dickwandigem Glas mit Möglichkeit zur Innenkühlung werden 119,9 g wasserfreies Tetrahydrofuran, 2,17 g wasserfreies Methanol und 13,05 g eines Bortrifluorid-tetrahydrofuran-Adduktes vorgelegt und auf etwa 40 °C erwärmt. Sodann wird unter gutem Schütteln und gegebenenfalls Kühlung ein Gemisch, bestehend aus 250,3 g Ethylenoxid, 286,0 g Propylenoxid, 329,4 g 1,2-Epoxidecan und 41,25 g wasserfreiem Methanol so zugepumpt, daß die Reaktionstemperatur nicht über 55 °C ansteigt. Nach beendeter Zugabe läßt man 1 Stunde nachreagieren.

Nach kurzer Gasspülung mit Stickstoff zur Entfernung leichtflüchtiger Ausgangsprodukte gibt man eine Lösung von 30,6 g wasserfreier Soda in 153,6 g Wasser zu, heizt unter Durchleiten eines schwachen Stickstoffstromes auf 100 °C, danach langsam auf 140 °C hoch und hält 2 Stunden bei dieser Temperatur. Durch diese Maßnahmen werden restliches Tetrahydrofuran sowie niedermolekulare flüchtige cyclische Oligomere entfernt.

Nach nochmaliger Zugabe von Wasser kühlt man das Reaktionsgemisch und trennt den Polyether ab. In dem Polyether sind die Ausgangskomponenten in folgenden Anteilen enthalten :

10,6 Gew.-Teile Tetrahydrofuran
25,8 Gew.-Teile Ethylenoxid
29,6 Gew.-Teile Propylenoxid und
34,0 Gew.-Teile Epoxidecan
Molekulargewicht : 830 (aus OH-Zahl)
Molekulargewicht : 620 (osmotisch)
Stockpunkt : – 58 bis – 59 °C
Kinematische Viskosität bei 40 °C : 59,8 $mm^2$
100 °C : 10,88 $mm^2$
Viskositätsindex : 193

Zur Prüfung der Mineralölverträglichkeit wurden 10 Gew.-Teile des Polyethers bei 100 °C mit 90 Gew.-Teilen eines paraffinbasischen Mineralöls (ASTM-Klassifikation : ASTM-D2226 ; 104 ; B, Dichte bei 15 °C 0,888 [$g/cm^3$] ; Viskosität bei 50 °C 87,4 [$mm^2$] und bei 100 °C 14,3 [$mm^2$] ; Zusammensetzung : 3 % aromatische Kohlenwasserstoffe, 32 % naphthenische Kohlenwasserstoffe und 65 % paraffinische Kohlenwasserstoffe) intensiv vermischt. Nach 2-wöchigem Stehen wurde auf klare Löslichkeit geprüft. Die Probe nach Beispiel 10 ergibt eine klare Lösung ; sie ist also mineralölverträglich.

Das Reibungsverhalten des Polyethers wurde in einem Zwei-Scheiben-Reibungsprüfstand [6,8] in Abhängigkeit von der Anpreßkraft $F_N$, der Scheibenumfangsgeschwindigkeit $V_1$ und dem Schlupf $s = (V_1 - V_2)/V_1$ bestimmt.

Der Schmierstoff wird mit einer Einspritztemperatur von 50 °C zwischen die Prüfscheiben gespritzt.

Die Scheiben bestehen aus einem Werkstoff, der nach DIN 17006 mit 100 Cr6 beschrieben wird. Beide Scheiben haben Durchmesser von 80 mm, eine Scheibe ist als Zylinder, die andere als Kugelausschnitt ausgebildet. Der arithmetische Mittenrauhwert der Scheiben $R_a$ beträgt ca. 0,085 μm.

In den Figuren 1 bis 4 ist die Abhängigkeit der Reibungszahl von Schlupf, von der Anpreßkraft und von der Umfangsgeschwindigkeit dargestellt.

Die in den folgenden Figuren dargestellten Meßergebnisse wurden bei folgenden Betriebsbedingungen ermittelt (in Klammern die entsprechende Hertzsche Pressung) :

| | | |
|---|---|---|
| Figur 1 | $F_N$ = 125 N | (750 N/$mm^2$) |
| Figur 2 | $F_N$ = 400 N | (1 100 N/$mm^2$) |
| Figur 3 | $F_N$ = 1 000 N | (1 500 N/$mm^2$) |
| Figur 4 | $F_N$ = 2 000 N | (1 890 N/$mm^2$) |
| Figur 5 | $F_N$ = 4 080 N | (24 000 N/$mm^2$) |

Bei den einzelnen Figuren 1 bis 5 entsprechen die Bezeichnungen folgenden Scheibenumfangsgeschwindigkeiten :

| | |
|---|---|
| 1 V = | 0,42 m/s |
| 2 | 0,84 m/s |
| 3 | 2,10 m/s |
| 4 | 4,19 m/s |
| 5 | 8,38 m/s |
| 6 | 12,57 m/s |

Die Ergebnisse zeigen die im gesamten Untersuchungsbereich besonders niedrigen Reibungszahlen.

Bei dem Test nach Almen-Wieland (schweizer Archiv, Annales Suisses, M. Brunner und R. Pedrini, Teil 1, Juni 1955, Nr. 6, Seiten 169 bis 177 ; Teil 2, August 1955, Nr. 8, Seiten 251 bis 257) zeigt der Polyether nach Beispiel 10 eine Schweißkraft, die größer als 18 000 N ist ; bei einer Reibungskraft von mehr als 3 500 N und einer Temperatur von 116 °C blockierte die Maschine, verschweißte aber nicht.

Der Reichert-Reibverschleißtest bei 15 N Belastung ergibt mit dem Polyether nach Beispiel 1 eine Verschleißmarke von 11,3 $mm^2$ und eine spezifische Belastbarkeit von 26,7 MPa (Schmierungstechnik (1960) Nr. 5, E. Kadmer und H. Danninger).

Der zur Beschreibung der schmierfilmbildenden Eigenschaften erforderliche Viskositäts-Druckkoeffizient ist über die effektive Schmierfilmdicke im Wälzkontakt in einem Prüfgerät (Schmierungstechnik und Tribologie, *27* (1980) 2, Seiten 55-57) ermittelt worden. Es haben sich folgende Werte ergeben :

Scherreibungszahl : 0,030
Viskositäts-Druckkoeffizient : 13 ($m^2/N\ 10^{-9}$)

Beispiel 11

Dieses Beispiel wird analog dem Beispiel 10 unter Vorlage einer Mischung, bestehend aus 108 g absolutem Tetrahydrofuran, 2,4 g absolutem Methanol und 14,5 g Bortrifluorid-tetrahydrofuranat und

unter Zugabe einer Mischung, bestehend aus 66 g Ethylenoxid, 577,2 g eines technischen 1,2-Epoxidodecans und 45,6 g absolutem Methanol, durchgeführt.

Zusammensetzung :

14,4 Gew.-Teile Tetrahydrofuran
8,8 Gew.-Teile Ethylenoxid
76,8 Gew.-Teile 1,2-Epoxidodecan

Molgewicht etwa 640 (aus OH-Zahl)
Molgewicht 530 (osmotisch)
Stockpunkt : − 22 °C
Kinematische Viskosität bei 37,8 °C 47,1 $mm^2/s$
98,9 °C 8,10 $mm^2/s$
Viskositätsindex : 157

Das Verhältnis der Anzahl der Kohlenstoffatome zu der Anzahl der Sauerstoffatome beträgt 7,80 : 1.
Das Produkt ist ebenfalls gut mineralölverträglich.

## Beispiel 12

Dieses Beispiel wird analog dem Beispiel 10 unter Vorlage einer Mischung bestehend aus 135 g absolutem Tetrahydrofuran, 2,8 g absolutem Methanol und 16,4 g Bortrifluorid-tetrahydrofuranat und Zugabe einer Mischung, bestehend aus 312,9 g Ethylenoxid, 376,1 g Propylenoxid, 425,7 g eines technischen 1,2-Epoxidodecans und 51,5 g absolutem Methanol unter denselben Reaktions- und Aufarbeitungsbedingungen hergestellt.

In dem Polyether sind die Ausgangskomponenten in folgenden Anteilen enthalten :

25,0 Gew.-Teile Ethylenoxid
30,1 Gew.-Teile Propylenoxid
34,1 Gew.-Teile 1,2-Epoxidodecan
10,8 Gew.-Teile Tetrahydrofuran

Molgewicht etwa 900 (aus OH-Zahl)
Molgewicht 650 (osmotisch)
Stockpunkt : − 45 bis − 46 °C
Kinematische Viskosität bei 37,8 °C 63,8 $mm^2/s$
98,9 °C 11,6 $mm^2/s$
Viskositätsindex : 191

Das Verhältnis der Anzahl der Kohlenstoffatome zu der Anzahl der Sauerstoffatome beträgt 3,81 : 1.
Das Produkt ist ebenfalls gut mineralölverträglich.
Viskositäts-Druckkoeffizient : 3 $[m^2/N \cdot 10^{-9}]$

## Beispiel 13

In das Reaktionsgefäß legt man eine Mischung aus 324 g absolutem Tetrahydrofuran, 5,55 g absolutem Butanol und 8,1 g Bortrifluorid-tetrahydrofuranat vor und dosiert unter Außenkühlung eine Mischung aus 468 g 1,2-Epoxidecan, 324 g 1,2-Butylenoxid und 105,5 g absolutem Butanol so zu, daß eine Reaktionstemperatur von 27 bis 33 °C eingehalten wird. Nach etwa 2-stündiger Nachreaktion bei 30 °C wird analog zu Beispiel 1 aufgearbeitet.

Im dem Polyether sind die Ausgangskomponenten in folgenden Anteilen enthalten :

29,0 Gew.-Teile 1,2-Butylenoxid
42,0 Gew.-Teile 1,2-Epoxidecan und
29,0 Gew.-Teile Tetrahydrofuran

Molgewicht : 1 060 (berechnet aus der OH-Zahl)
Molgewicht : 700 (osmotisch)
Stockpunkt : − 50 °C
Kinematische Viskosität bei 37,8 °C 103,3 $mm^2/s$
98,9 °C 26,0 $mm^2/s$
Viskositätsindex : 177
Das Verhältnis der Anzahl der Kohlenstoffatome zu der Anzahl der Sauerstoffatome beträgt 5,34 : 1.
Das Produkt ist ebenfalls gut mineralölverträglich.

Beispiel 14

In einem luftdicht verschlossenen, ca. 2 l fassenden Schüttelgefäß aus dickwandigem Glas mit Möglichkeit zur Innenkühlung werden 259,6 g wasserfreies Tetrahydrofuran und 15,6 g Bortrifluorid-tetrahydrofuran-Addukt vorgelegt und auf 40 °C erwärmt. Dann pumpt man unter Schütteln und evtl. Kühlung ein Monomergemisch, bestehend aus 278,0 g Tetrahydrofuran, 129,9 g Propylenoxid, 217,1 g Ethylenoxid und 495,5 g 1,2-Epoxidodecan so zu, daß die Temperatur nicht über 55 °C ansteigt. Nach beendeter Zugabe läßt man 1 Stunde nachreagieren.

Nach kurzer Gasspülung mit Stickstoff zur Entfernung leichtflüchtiger Ausgangsprodukte gibt man eine Lösung von 30,6 g wasserfreiem Soda in 153,6 g Wasser zu, heizt unter Durchleiten eines schwachen Stickstoffstromes auf 100 °C, danach langsam auf 140 °C hoch und hält 2 Stunden bei dieser Temperatur. Durch diese Maßnahme werden restliches Tetrahydrofuran sowie niedermolekulare flüchtige cyclische Oligomere entfernt.

In dem Polyether sind die Ausgangskomponenten in folgenden Anteilen enthalten :

15,7 Gew.-Teile Ethylenoxid
9,4 Gew.-Teile Propylenoxid
36,0 Gew.-Teile 1,2-Epoxidodecan und -tetradecan
39,0 Gew.-Teile Tetrahydrofuran

Molekulargewicht : 4 315 (aus OH-Zahl)
Molekulargewicht : 1 200 (osmotisch)
Stockpunkt : – 39 bis – 40 °C ; Flammpunkt : 247 °C
Kinematische Viskosität bei 40 °C 50,2 $mm^2/s$
100 °C 75,8 $mm^2/s$
Viskositätsindex : 229

Verhältnis Anzahl der Kohlenstoffatome in der Anzahl der Sauerstoffatome : 4,58 : 1.

Zur Prüfung der Mineralölverträglichkeit wurden 10 Gew.-Teile des Polyethers bei 100 °C mit 90 Gew.-Teilen eines Paraffin-basischen Mineralöls (ASTM-Klassifikation ASTM-D 2226 104 B ; Dichte bei 15 °C 0,888 [$g/m^3$] ; Viskosität bei 50 °C 87,4 [$mm^2/sec$] und bei 100 °C 14,3 [$mm^2/sec$] ; Zusammensetzung ; 3 % aromatische Kohlenwasserstoffe, 32 % naphthenische Kohlenwasserstoffe und 65 % paraffinische Kohlenwasserstoffe) intensiv vermischt. Nach 2-wöchigem Stehen wurde auf klare Löslichkeit geprüft. Die Probe nach Beispiel 14 ergibt eine klare Lösung ; sie ist also mineralölverträglich.

Beispiel 15

Dieses Beispiel wird analog dem Beispiel 14 unter Vorlage einer Mischung, bestehend aus 145,8 g absolutem Tetrahydrofuran, 1,7 g Butandiol-1,4 und 9,4 g Bortrifluorid-Tetrahydrofuranat und Zugabe einer Mischung, bestehend aus 178,2 g absolutem Tetrahydrofuran, 149,2 g Ethylenoxid, 196,8 g Propylenoxid, 924,7 g 1,2-Epoxidodecan und 32,1 g Butandiol-1,4 unter denselben Reaktions- und Aufarbeitungsbedingungen durchgeführt. Pro Mol Butandiol-1,4 werden also 34,6 Mol Oxacycloalkane zugegeben.

Ausbeute : 939 g.

In dem Polyether sind die Ausgangskomponenten in folgenden Anteilen enthalten :

15,0 Gew.-Teile Ethylenoxid
19,8 Gew.-Teile Propylenoxid
32,6 Gew.-Teile 1,2-Epoxidodecan
32,6 Gew.-Teile Tetrahydrofuran

Molgewicht ca. 2 100 (aus OH-Zahl)
Molgewicht 1 200 (osmotisch)
Stockpunkt : – 39 °C ; Flammpunkt 197 bis 198 °C
Kinematische Viskosität bei 37,8 °C 313,3 $mm^2/s$
98,9 °C 42,8 $mm^2/s$
Viskositätsindex : 202

Das Verhältnis der Anzahl der Kohlenstoffatome zu der Anzahl der Sauerstoffatome beträgt 4,19 : 1.

Das Produkt ist nach der bei Beispiel 10 beschriebenen Prüfmethode ebenfalls gut mineralölverträglich.

Beispiel 16 (Vergleichsbeispiel)

Dieses Vergleichsbeispiel wird analog dem Beispiel 14 unter Vorlage einer Mischung, bestehend aus

162 g absolutem Tetrahydrofuran, 5,6 g Butandiol-1,4 und 10,5 g Bortrifluorid-tetrahydrofuranat und Zugabe einer Mischung, bestehend aus 198 g absolutem Tetrahydrofuran, 240 g Ethylenoxid, 359,9 g Propylenoxid, 239,5 g 1,2-Epoxidodecan und 106,9 g Butandiol-1,4, unter denselben Reaktions- und Aufarbeitungsbedingungen durchgeführt. Pro Mol Butandiol-1,4 werden also 14,3 Mol cyclische Ether (« Oxacycloalkane ») zugegeben (mittleres Molgewicht der Oxacycloalkane 67,1).

In dem Polyether sind die Ausgangskomponenten in folgenden Anteilen enthalten :

20,0 Gew.-Teile Ethylenoxid
30,0 Gew.-Teile Propylenoxid
20,0 Gew.-Teile 1,2-Epoxidodecan und -tetradecan
30,0 Gew.-Teile Tetrahydrofuran

Molgewicht ca. 1 060 (aus OH-Zahl)
Molgewicht 710 (osmotisch)
Stockpunkt : − 40 bis − 41 °C ; Flammpunkt 195 bis 196 °C
Kinematische Viskosität bei 37,8 °C 146,1 $mm^2/s$
98,9 °C 20,0 $mm^2/s$
Viskositätsindex : 168

Im Verhältnis der Anzahl der Kohlenstoffatome in der Anzahl der Sauerstoffatome beträgt : 3,39. Das Produkt ist nicht mineralölverträglich.

**Ansprüche**

1. Polyether, erhältlich durch Polymerisation eines 1,2-Epoxyalkans, das 8 bis 26 Kohlenstoffatome enthält, und eines Tetrahydrofurans in Gegenwart einer Hydroxyverbindung der Formel (I)

$$H—OR^1 \quad (I),$$

in der

$R^1$ Wasserstoff, einen Alkylrest mit 1 bis 24 Kohlenstoffatomen oder einen Hydroxyalkylrest mit 2 bis 40 Kohlenstoffatomen bedeutet.

2. Polyether nach Anspruch 1, dadurch gekennzeichnet, daß man 10 bis 98 Gew.-Teile des 1,2-Epoxyalkans und 2 bis 90 Gew.-Teile eines Tetrahydrofurans einsetzt.

3. Polyether nach den Ansprüchen 1 und 2, erhältlich durch Polymerisation von 10 bis 90 Gew.-Teilen eines 1,2-Epoxyalkans, 5 bis 55 Gew.-Teilen eines Tetrahydrofurans und 0 bis 70 Gew.-Teilen Ethylenoxid und/oder 0 bis 70 Gew.-Teilen Propylen- oder Butylenoxid, wobei wenigstens Ethylenoxid oder Propylen- bzw. Butylenoxid eingesetzt wird, und in Gegenwart einer monofunktionellen Hydroxyverbindung der Formel (II)

$$H—OR^2 \quad (II),$$

in der

$R^2$ einen Alkylrest mit 1 bis 24 Kohlenstoffatomen bedeutet,

und wobei in dem Polyether das Verhältnis der Anzahl der Kohlenstoffatome zu der Anzahl der Sauerstoffatome 3,2 bis 10 : 1 beträgt.

4. Polyether nach den Ansprüchen 1 und 2, erhältlich durch Polymerisation von 10 bis 90 Gew.-Teilen eines 1,2-Epoxyalkans, 5 bis 55 Gew.-Teilen eines Tetrahydrofurans und 0 bis 70 Gew.-Teilen Ethylenoxid und/oder 0 bis 70 Gew.-Teilen Propylen- oder Butylenoxid, wobei wenigstens Ethylenoxid oder Propylen- bzw. Butylenoxid eingesetzt wird, und in Gegenwart einer bifunktionellen Hydroxyverbindung der Formel (III)

$$H—OR^3 \quad (III),$$

in der

$R^3$ Wasserstoff oder einen Hydroxyalkylrest mit 2 bis 40 Kohlenstoffatomen bedeutet,

und wobei in dem Polyether das Verhältnis der Anzahl der Kohlenstoffatome zu der Anzahl der Sauerstoffatome 3,6 bis 10 : 1 beträgt.

5. Verfahren zur Herstellung von Polyethern, dadurch gekennzeichnet, daß man ein 1,2-Epoxyalkan, wobei der Alkylenrest 8 bis 26 Kohlenstoffatome enthält, und Tetrahydrofuran in Gegenwart einer Hydroxyverbindung der Formel (I)

$$H—OR^1 \quad (I),$$

in der

$R^1$ Wasserstoff, einen Alkylrest mit 1 bis 24 Kohlenstoffatomen oder einen Hydroxyalkylrest mit 2 bis 40 Kohlenstoffatomen bedeutet,

polymerisiert.

6. Verfahren nach Anspruch 5, dadurch gekennzeichnet, daß die Hydroxyverbindung in einer Menge von 0,3 bis 90 Gew.-%, bezogen auf das gesamte Reaktionsgemisch, eingesetzt wird.

7. Verfahren nach den Ansprüchen 5 und 6, dadurch gekennzeichnet, daß es im Temperaturbereich von − 20 bis 100 °C durchgeführt wird.

8. Schmiermittel, enthaltend Polyether nach den Ansprüchen 1 bis 4.

9. Verwendung von Polyether nach den Ansprüchen 1 bis 4 in Schmiermitteln für Leistungsgetriebe.

10. Verwendung von Polyethern nach den Ansprüchen 1 bis 4 in Abmischung mit Mineralölen als Schmiermittel.

**Claims**

1. Polyethers, obtainable by polymerisation of a 1,2-epoxyalkane, which contains 8 to 26 carbon atoms, and a tetrahydrofuran in the presence of a hydroxyl compound of the formula (I)

$$H—OR^1 \qquad (I),$$

in which

$R^1$ denotes hydrogen, an alkyl radical with 1 to 24 carbon atoms or a hydroxyalkyl radical with 2 to 40 carbon atoms.

2. Polyethers according to Claim 1, characterised in that 10 to 98 parts by weight of the 1,2-epoxyalkane and 2 to 90 parts by weight of a tetrahydrofuran are employed.

3. Polyethers according to Claims 1 and 2, obtainable by polymerisation of 10 to 90 parts by weight of a 1,2-epoxyalkane, 5 to 55 parts by weight of a tetrahydrofuran and 0 to 70 parts by weight of ethylene oxide and/or 0 to 70 parts by weight of propylene or butylene oxide, at least ethylene oxide or propylene or butylene oxide being employed, and in the presence of a monofunctional hydroxyl compound of the formula (II)

$$H—OR^2 \qquad (II),$$

in which

$R^2$ denotes an alkyl radical with 1 to 24 carbon atoms, the ratio of the number of carbon atoms to the number of oxygen atoms in the polyether being 3.2 to 10 : 1.

4. Polyethers according to Claims 1 and 2, obtainable by polymerisation of 10 to 90 parts by weight of a 1,2-epoxyalkane, 5 to 55 parts by weight of a tetrahydrofuran and 0 to 70 parts by weight of ethylene oxide and/or 0 to 70 parts by weight of propylene or butylene oxide, at least ethylene oxide or propylene or butylene oxide being employed, and in the presence of a bifunctional hydroxyl compound of the formula (III)

$$H—OR^3 \qquad (III),$$

in which

$R^3$ denotes hydrogen or a hydroxyalkyl radical with 2 to 40 carbon atoms,

the ratio of the number of carbon atoms to the number of oxygen atoms in the polyether being 3.6 to 10 : 1.

5. Process for the preparation of polyethers, characterised in that a 1,2-epoxyalkane, the alkylene radical containing 8 to 26 carbon atoms, and tetrahydrofuran are polymerised in the presence of a hydroxyl compound of the formula (I)

$$H—OR^1 \qquad (I),$$

in which

$R^1$ denotes hydrogen, an alkyl radical with 1 to 24 carbon atoms or a hydroxyalkyl radical with 2 to 40 carbon atoms.

6. Process according to Claim 5, characterised in that the hydroxyl compound is employed in a quantity of 0.3 to 90 % by weight, based on the total reaction mixture.

7. Process according to Claims 5 and 6, characterised in that it is carried out in the temperature range of − 20 to 100 °C.

8. Lubricants containing polyethers according to Claims 1 to 4.

9. Use of polyethers according to Claims 1 to 4 in lubricants for power-transmission gears.

10. Use of polyethers according to Claims 1 to 4, in admixture with mineral oils, as lubricants.

**Revendications**

1. Polyéther obtenu par polymérisation d'un 1,2-époxy-alcane contenant 8 à 26 atomes de carbone, ainsi que d'un tétrahydrofuranne en présence d'un composé hydroxy de formule (I)

$$H—OR^1 \quad (I),$$

dans laquelle
$R^1$ représente un atome d'hydrogène, un groupe alkyle contenant 1 à 24 atomes de carbone ou un groupe hydroxy-alkyle contenant 2 à 40 atomes de carbone.

2. Polyéther suivant la revendication 1, caractérisé en ce qu'on utilise 10 à 98 parties en poids du 1,2-époxy-alcane et 2 à 90 parties en poids d'un tétrahydrofuranne.

3. Polyéther suivant les revendications 1 et 2, obtenu par polymérisation de 10 à 90 parties en poids d'un 1,2-époxy-alcane, de 5 à 55 parties en poids d'un tétrahydrofuranne et de 0 à 70 parties en poids d'oxyde d'éthylène et/ou de 0 à 70 parties en poids d'oxyde de propylène ou d'oxyde de butylène, en utilisant au moins l'oxyde d'éthylène ou l'oxyde de propylène ou encore l'oxyde de butylène, en présence d'un composé hydroxy monofonctionnel de formule (II)

$$H—OR^2 \quad (II),$$

dans laquelle
$R^2$ représente un groupe alkyle contenant 1 à 24 atomes de carbone,
le rapport entre le nombre d'atomes de carbone et le nombre d'atomes d'oxygène du polyéther étant de 3,2 à 10 : 1.

4. Polyéther suivant les revendications 1 et 2, obtenu par polymérisation de 10 à 90 parties en poids d'un 1,2-époxy-alcane, de 5 à 55 parties en poids d'un tétrahydrofuranne et de 0 à 70 parties en poids d'oxyde d'éthylène et/ou de 0 à 70 parties en poids d'oxyde de propylène ou d'oxyde de butylène, en utilisant au moins l'oxyde d'éthylène ou l'oxyde de propylène ou encore l'oxyde de butylène, en présence d'un composé hydroxy difonctionnel de formule (III)

$$H—OR^3 \quad (III),$$

dans laquelle
$R^3$ représente un atome d'hydrogène ou un groupe hydroxyalkyle contenant 2 à 40 atomes de carbone,
le rapport entre le nombre d'atomes de carbone et le nombre d'atomes d'oxygène dans le polyéther étant de 3,6 à 10 : 1.

5. Procédé de préparation de polyéthers, caractérisé en ce qu'on polymérise un 1,2-époxy-alcane, le groupe alkylène contenant 8 à 26 atomes de carbone, ainsi que du tétrahydrofuranne en présence d'un composé hydroxy de formule (I)

$$H—OR^1 \quad (I),$$

dans laquelle
$R^1$ représente un atome d'hydrogène, un groupe alkyle contenant 1 à 24 atomes de carbone ou un groupe hydroxy-alkyle contenant 2 à 40 atomes de carbone.

6. Procédé suivant la revendication 5, caractérisé en ce qu'on utilise le composé hydroxy en une quantité de 0,3 à 90 % en poids, calculé sur le mélange réactionnel total.

7. Procédé suivant les revendications 5 et 6, caractérisé en ce qu'on l'effectue à une température se situant dans l'intervalle allant de − 20 à 100 °C.

8. Lubrifiant contenant un polyéther suivant les revendications 1 à 4.

9. Utilisation d'un polyéther suivant les revendications 1 à 4 dans des lubrifiants pour engrenages de puissance.

10. Utilisation de polyéthers suivant les revendications 1 à 4, e.. mélange avec des huiles minérales comme lubrifiants.

FIG. 1

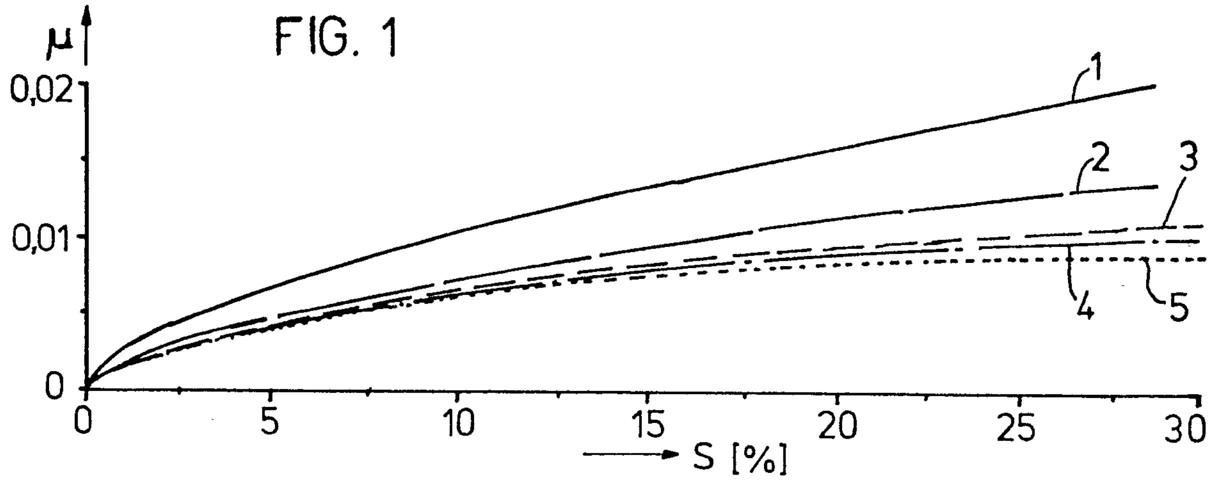
μ
0,02
0,01
0
0
5
10
15
20
25
30
S [%]
1
2
3
4
5

FIG. 2

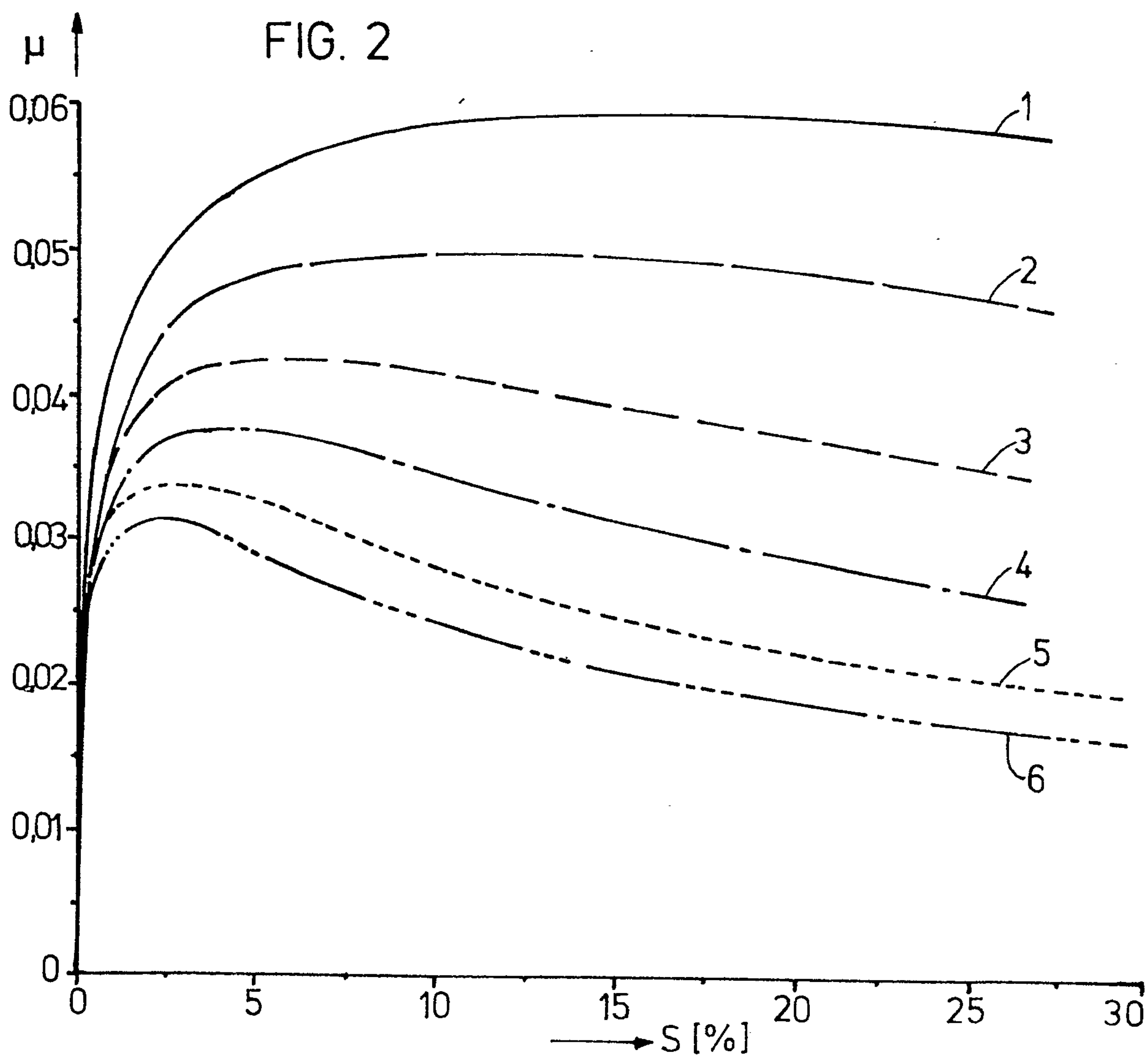
μ
0,06
0,05
0,04
0,03
0,02
0,01
0
0
5
10
15
20
25
30
S [%]
1
2
3
4
5
6

FIG. 3

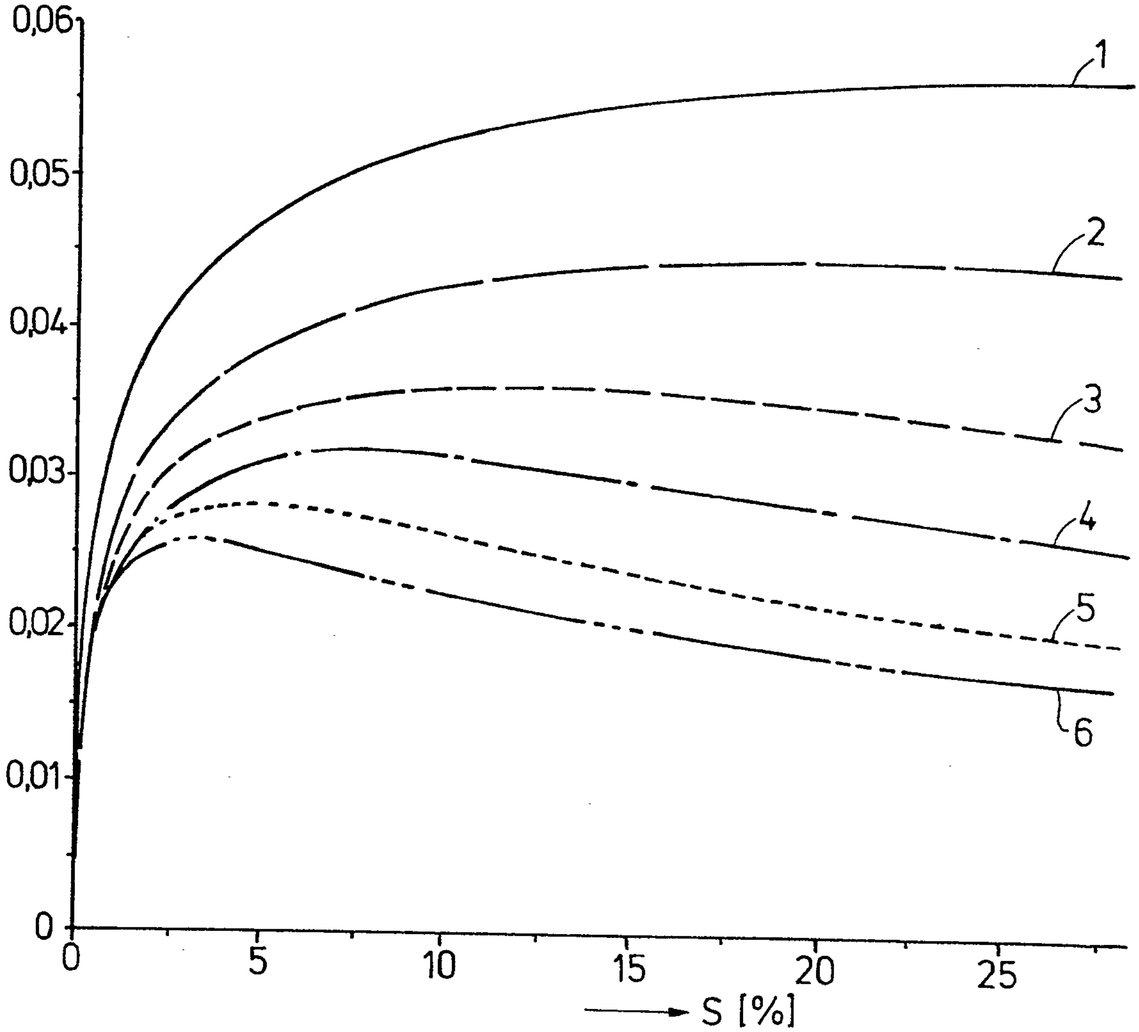

FIG. 4

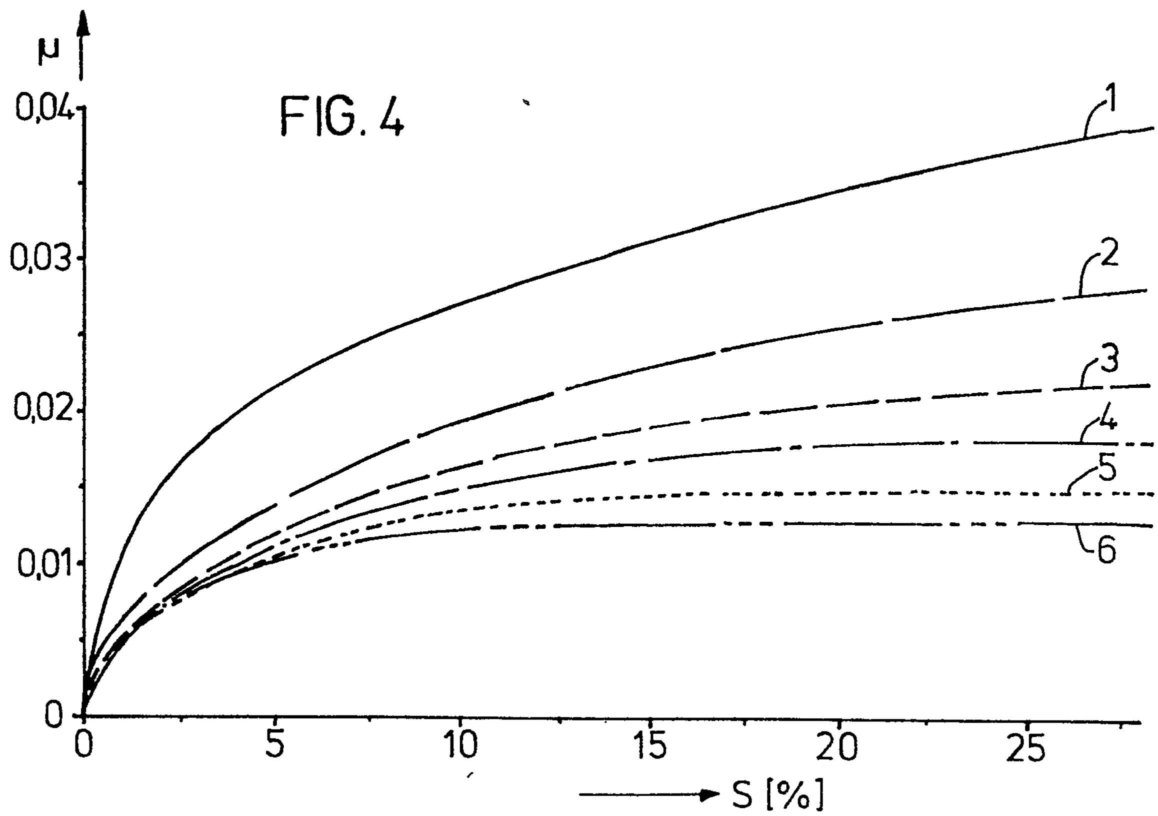
μ
0,04
0,03
0,02
0,01
0
0
5
10
15
20
25
S [%]
1
2
3
4
5
6

FIG. 5

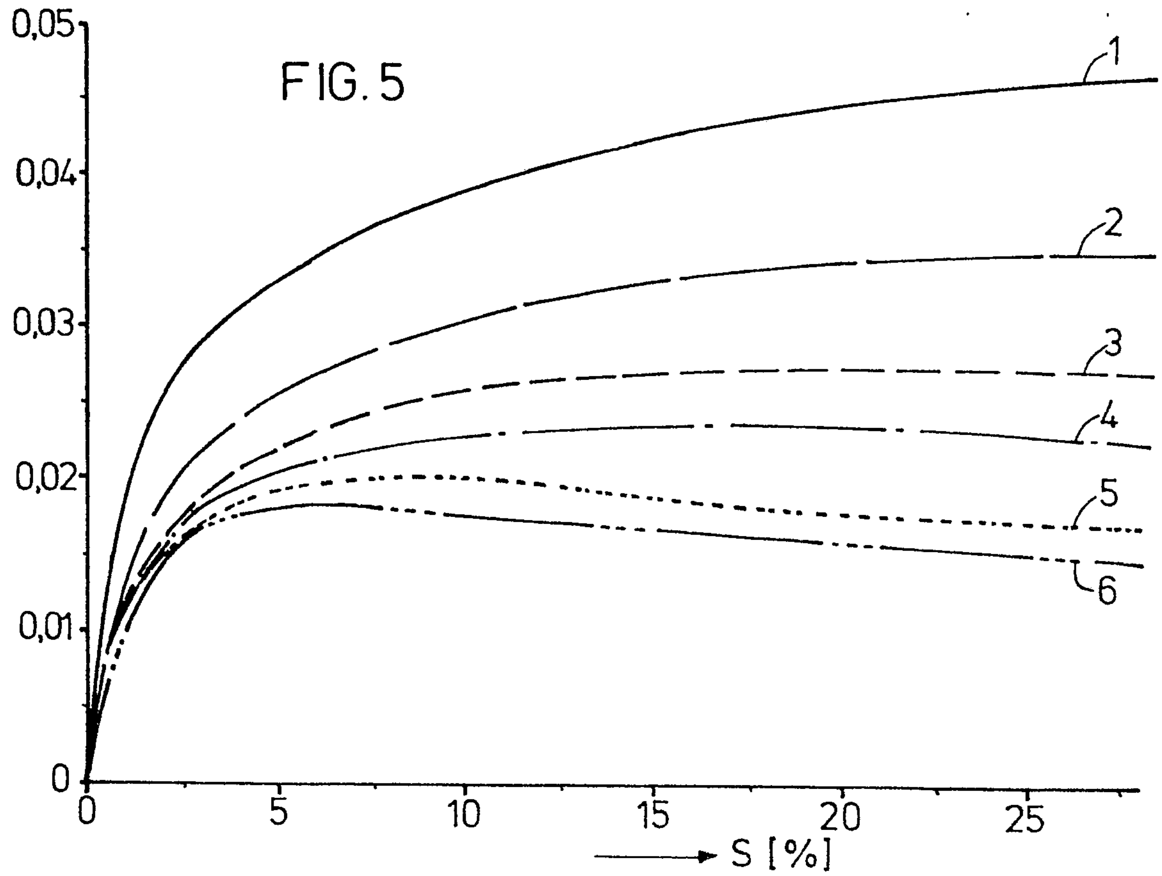
0,05
0,04
0,03
0,02
0,01
0
0
5
10
15
20
25
S [%]
1
2
3
4
5
6